# EUROPÄISCHE PATENTSCHRIFT

(11) **EP 1 689 020 B1**
(45) Veröffentlichungstag und Bekanntmachung des Hinweises auf die Patenterteilung: **20.03.2013**
(21) Anmeldenummer: 05001864.7
(22) Anmeldetag: 28.01.2005
(51) Int. Cl.: H01Q 1/22, H01Q 1/38, H01Q 9/28, H01Q 7/00, G06K 19/077

(54) **Folie mit aufgedruckter Antenne**
Foil with a printed antenna
Film avec antenne imprimée

(43) Veröffentlichungstag der Anmeldung: 09.08.2006
(73) Patentinhaber: Mondi Gronau GmbH, 48599 Gronau (DE)
(72) Erfinder: Kohla, Michael, Dr., 48329 Havixbeck (DE); Homölle, Dieter, 48607 Ochtrup (DE)
(74) Vertreter: Albrecht, Rainer Harald

(56) Entgegenhaltungen:
- US-A- 6 104 280
- US-A- 6 147 662
- US-A1- 2002 003 496
- US-A1- 2003 080 903
- US-A1- 2003 151 028
- US-B1- 6 232 923
- PATENT ABSTRACTS OF JAPAN Bd. 2003, Nr. 12, 5. Dezember 2003 (2003-12-05) -& JP 2004 236273 A (MATSUSHITA ELECTRIC IND CO LTD), 19. August 2004 (2004-08-19)

## Beschreibung

Die Erfindung betrifft eine Folie mit einer aufgedruckten Antenne gemäß dem Oberbegriff des Patentanspruchs 1. RFID (Radio-Frequenz-Identifikation)-Chips sind aktive oder passive Schaltkreise, die kontaktlos mit einem Lesegerät ausgelesen werden können und zur Warenkennzeichnung geeignet sind.

Eine Etikettenfolie mit einer aufgedruckten Halbwellen-Dipolantenne ist aus WO 03/068874 A1 bekannt. Dabei werden Antennen mit vollflächigen Leiterbahnen auf die Etikettenfolie gedruckt. Die Antennen werden jeweils aus einer Leiterbahn mit zwei Lefterbahnstücken gebildet.

Die US 2003/080903 A1 betrifft eine Dipolantenne, bei der eine Vielzahl von beabstandeten, symmetrisch geformten leitfähigen Strukturen auf eine dielektrische Trägerplatte aufgebracht sind. Zwischen den beabstandeten Strukturen sind zusätzliche, separat aufgebrachte Koppelstrukturen vorgesehen. Die beschriebene Antenne wird für Headsets von Mobiltelefonen eingesetzt und ermöglicht eine Verringerung der Baugröße bezogen auf eine übliche Halbwellen-Dipolantenne, bei der die Länge der Leiterbahnstücke mit der Wellenlänge direkt korreliert.

Eine stimmbare Antenne auf einem flexiblen Substrat für den Hochfrequenzbereich ist aus US 2002/0003496 A1 bekannt, Die Antenne weist vollflächige Leiterbahnen und zur Abstimmung der Antenne zusätzliche, abtrennbare Leiterstrukturen auf. Verglichen mit einer für eine feste Frequenz ausgelegte Antenne mit Leiterbahnen, die sich von Anschlussenden ausgehend erstrecken, wird für die Herstellung der zusätzlichen Strukturen ein Vielfaches an leitfähigem Antennenmaterial benötigt.

Der Erfindung liegt die Aufgabe zugrunde, die Kosten und den Aufwand an leitfähiger Druckfarbe für die Serienfertigung einer Folie mit einer aufgedruckten Antenne zu reduzieren. Die Antenne soll sich ferner durch gute Funktionseigenschaften, speziell Breitbandigkeit, hohe Rückflussdämpfung und geringe Über tragungsdämpfung, auszeichnen.

Gegenstand der Erfindung und Lösung der Aufgabe ist eine Folie mit einer aufgedrucken Antenne gemäß Anspruch 1. Durch die Aussparungen kann der Materialaufwand der hochpreisigen Druckfarbe signifikant reduziert werden, ohne die breitbandigen Eigenschaften der Antenne, verglichen mit einer Antenne mit vollflächigen Leiterbahnen, zu verschlechtern. Unter Breitbandigkeit werden in diesem Zusammenhang die Übertragungseigenschaften der Antenne oberhalb und unterhalb der zentralen Resonanzfrequenz der Antenne bezeichnet.

Um die auf die Folie, z. B. eine Etikettenfolie oder eine Verpackungsfolie, aufgebrachte Antenne bei der Verwendung mit einem RFID-Chip vielseitig nutzen zu können, wird in dem UHF-Bereich zwischen 800 und 1000 MHz oder im SHF-Bereich zwischen 2,4 und 2,6 GHz eine Breitbandigkeit von 100 MHz angestrebt. Die Antenne weist vorzugsweise eine Bandbreite von mehr als 100 MHz auf, wenn man eine Reduzierung der Rückflussdämpfung im Resonanzbereich bis auf -10 dB zugrundelegt. Die Resonanzfrequenz der Antennen ergibt sich aus deren Geometrie und Abmessungen. So sind bei einer Halbwellen-Dipolantenne die Länge der Leiterbahnstücke mit der Wellenlänge direkt korreliert.

Grundsätzlich können verschiedene Druckverfahren für den Aufdruck der Antennen genutzt werden. Als besonders geeignet für die serienmäßige Fertigung der Folie erweist sich das Tiefdruckverfahren mit leitfähiger Druckfarbe. Dabei werden Antennen mit einer Druckfarbe, die ein leitendes Material enthält, auf eine Folienbahn aufgedruckt. Als Folienmaterial kommt polymeres Folienmaterial, vorzugsweise aus der Gruppe der Polyester, Polaymide und Polyolefine in Frage. Dazu gehören beispielsweise Polyethylenterephthalat, Polybutylenterephthalat, Polypropylen, Polyethylen, modifizierte oder vernetzte Polyethylene, Polystyrol und Mischungen oder Copolymerisate dieser Polymere. Die Folien können auch mehrschichtig coextrudiert oder laminiert sein.

Die Folienbahn weist eine Schichtdicke zwischen 30 und 150 µm auf. Sie kann als Rollenware in Verkehr gebracht werden. Von der Folienbahn sind Folienabschnitte mit jeweils einer Antenne abtrennbar.

Zusätzlich zu der hohen Folienbahngeschwindigkeit von 50 m/min und mehr, ermöglicht insbesondere das Tiefdruckverfahren eine exakte Dimensionierung der Schichtdicke der aufgebrachten Leiterbahnen. Bei dem Drucken kleiner Strukturen zeichnet sich das Tiefdruckverfahren z. B. gegenüber dem Siebdruckverfahren durch eine gute Kantenschärfe und geringe Rautiefe, die kleiner ist als 5 µm, aus. So ist es möglich, Leiterbahnen mit einer Schichtdicke unterhalb von 10 µm zu fertigen, wobei Toleranzen von weniger als ± 1 µm für alle auf eine Folienbahn aufgebrachten Antennen eingehalten werden können. Die aufgedruckten Leiterbahnen weisen Aussparungen mit beliebigen unregelmäßigen, im Besonderen auch fraktalen oder regelmäßigen, vorzugsweise runden, ellipsenförmigen oder rechteckigen Formen auf. Durch die Reduzierung der bedruckten Fläche, verglichen mit einer vollflächigen Antenne mit gleichen Außenabmessungen, kann die Menge der eingesetzten Druckfarbe reduziert werden, wodurch die Fertigungskosten deutlich reduziert werden. Dabei soll die Fläche der Aussparungen mindestens 50 % der Gesamtfläche der Leiterbahn mit den Aussparungen betragen.

Durch eine Variation der Breite der Aussparungen und der Dicke der Stege zwischen den Aussparungen können die Eigenschaften der Antenne, wie z. B. die Resonanzfrequenz, gezielt verändert werden.

Im Folgenden wird die Erfindung anhand einer lediglich ein Ausführungsbeispiel darstellenden Zeichnung erläutert. Es zeigen schematisch:
- **Fig. 1**: einen Ausschnitt aus einer Etikettenfolienbahn mit im Tiefdruckverfahren aufgebrachten Antennen,
- **Fig. 2a** - **2d**: verschiedene Ausgestaltungen einer erfindungsgemäßen Halbwellen-Dipolantenne,
- **Fig. 3**: eine Halbwellen-Dipolantenne nach dem Stand der Technik,
- **Fig. 4**: eine Antenne mit abgewinkelten Leiterbahnstücken und
- **Fig. 5**: eine nicht zur Erfindung gehörende Antennenschleife.

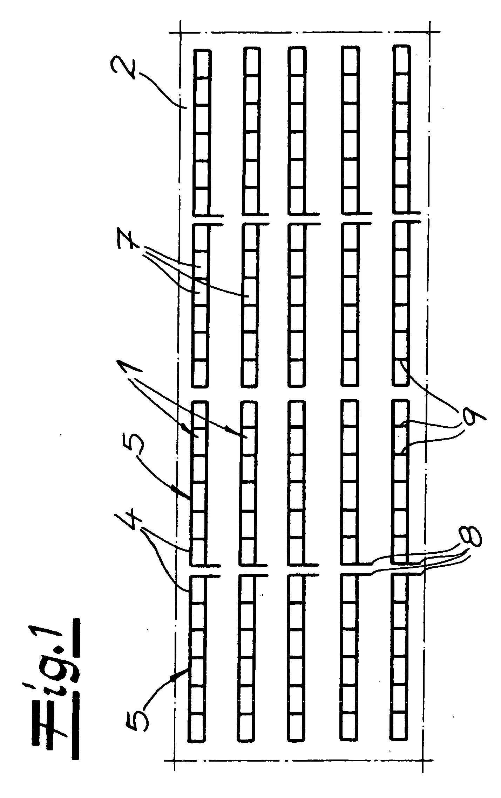

Fig. 1 zeigt einen Ausschnitt aus einer mit Antennen 1 bedruckten Folienbahn 2, aus der eine Vielzahl von Folien 3, die als Etiketten verwendet werden, mit jeweils einer Antenne 1 ausgestanzt werden können. Die Folienbahn 2 besteht vorzugsweise aus Polyethylenterephthalat (PET) und weist beispielsweise eine Dicke zwischen 30 und 150 µm auf. Diese Antennen 1 sind zur Verwendung mit RFID-Chips bestimmt und für eine Kopplung im UHF-Bereich zwischen 800 und 1000 MHz oder im SHF-Bereich zwischen 2,4 und 2,6 GHz ausgelegt. Ihre Leiterbahn 4 ist in zwei Leiterbahnstücke 5 aufgeteilt und bildet eine Halbwellen-Dipolantenne 6. Die Antenne 1 wird im Rotationsdruckverfahren mit einer leitenden Druckfarbe auf die Folienbahn 2 aufgedruckt und enthält fensterartige Aussparungen 7. Die Aussparungen 7 bilden Zellen innerhalb der in der Draufsicht rechteckförmigen Leiterbahnstücke 5 und weisen in Summe eine Fläche auf, die bezogen auf die äußeren Abmessungen der Antenne 1 mindestens 50 % betragen kann. Die auf die Folienbahn 2 aufgebrachte Druckfarbe enthält ein leitendes Material.

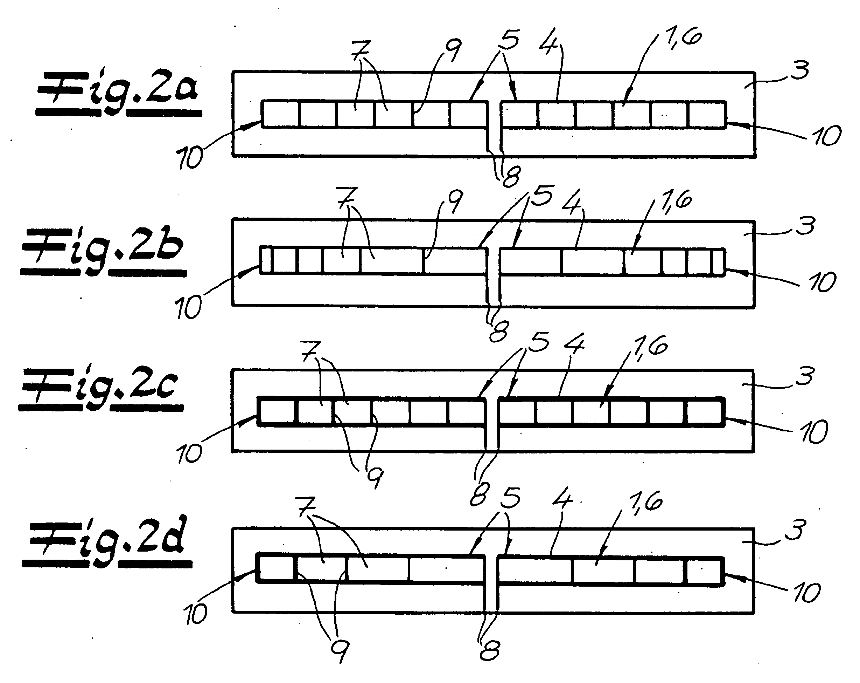

Die Fig. 2a zeigt eine Folie 3, die als Etikett verwendet werden soll, mit aufgedruckter Halbwellen-Dipolantenne 6. Die Halbwellen-Dipolantenne 6 weist zwei in der Draufsicht rechteckförmige Leiterbahnstücke 5 auf, die sich von einem mittig angeordneten Anschlussende 8 für einen RFID-Chip nach links bzw. rechts erstrecken. Die Leiterbahnstücke 5 enthalten Aussparungen 7, die als rechteckförmige Fenster ausgebildet sind. Im Ausführungsbeispiel der Fig. 2a sind sämtliche Aussparungen 7 in den Leiterbahnstücken 5 einheitlich groß ausgebildet. Die Stege 9 zwischen den Aussparungen 7 sind Teil der Leiterbahnstücke 5 und besitzen im Ausführungsbeispiel dieselbe Stegbreite.

Bei dem in Fig. 2b dargestellten Ausführungsbeispiel nehmen die Abmessungen der Aussparungen 7 in den aufgedruckten Leiterbahnstücken 5 in Richtung der Antennenenden 10 ab.

Im Ausführungsbeispiel der Fig. 2c ändert sich die Stegbreite der zwischen den Aussparungen 7 vorgesehenen Stege 9. Die Stegbreite dieser Stege wird in Richtung auf die Antennenenden 10 größer.

Im Ausführungsbeispiel der Fig. 2d sind die anhand der Fig. 2b und 2c beschriebenen Maßnahmen miteinander kombiniert worden.

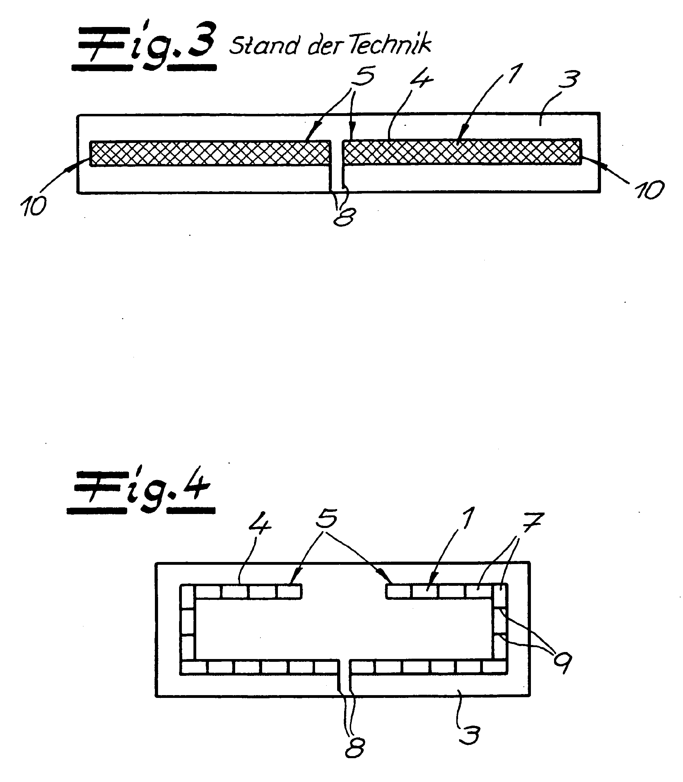

Die in den Fig. 2a bis 2d dargestellten erfindungsgemäßen Halbwellen-Dipolantennen 6 ermöglichen im Vergleich zu dem entsprechenden in Fig. 3 dargestellten Stand der Technik eine deutliche Reduzierung der benötigten Druckfarbe und erlauben somit eine kostengünstigere Fertigung von Folien 3, die mit einer aufgedruckten Antenne 1 zur Verwendung mit einem RFID-Chip bestimmt sind.

Fig. 4 zeigt eine Antenne 1 mit abgewinkelten Leiterbahnstücken. Durch diese Anordnung kann bei gleichbleibender Antennenfrequenz die Gesamtlänge der Antenne 1 reduziert werden.

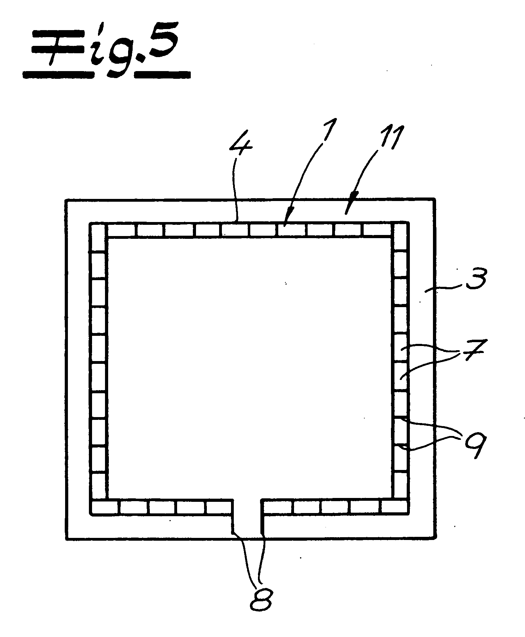

Fig. 5 zeigt eine Antennenstruktur bei der die Leiterbahn eine Antennenschleife 11 bildet. Eine Antenne 1 in der speziellen dargestellten Ausführung wird aufgrund ihrer Geometrie auch als Quad-Loop oder Ganzwellenschleife bezeichnet. Sie hat eine sehr gute Empfangsleistung. Die in der Leiterbahn angeordneten fensterartigen Aussparungen 11 können beliebige regelmäßige oder unregelmäßige Formen aufweisen und sind vorzugsweise rund, ellipsenförmig oder rechteckförmig. Im Ausführungsbeispiel weisen alle Aussparungen 7 im Wesentlichen die selben Abmessungen auf und haben die Stege 9 die selbe Stegbreite. Im Rahmen der Erfindung liegt es aber auch, die Aussparungen 7 unterschiedlich groß und/oder die Stege 9 mit unterschiedlichen Stegbreiten auszubilden.

Die erfindungsgemäßen Antennen zeichnen sich durch eine große Bandbreite, hohe Reflektionsdämpfung sowie eine geringe Übertragungsdämpfung aus. Überraschend verursachen die Aussparungen in der Leiterbahn praktisch keine signifikanten Übertragungsverluste.

## Patentansprüche

1. Folie mit einer aufgedruckten Antenne (1) zur Verwendung mit einem RFID-Chip, wobei die Antenne (1) zwei Leiterbahnstücke (5) aufweist, die sich von einem mittig angeordneten Anschlussende (8) für den RFID-Chip nach links und rechts erstrecken, wobei die Leiterbahnstücke (5) von dem Anschlussende (8) jeweils gerade, gebogen oder abgewinkelt in Richtung eines Antennenendes (10) verlaufen und wobei die Folie eine Dicke zwischen 30 µm und 150 µm aufweist, **dadurch gekennzeichnet, dass** die Leiterbahn (4) aus einer leitfähigen Druckfarbe besteht und fensterartige
Aussparungen (7) aufweist, wobei die Fläche der Aussparungen (7) mindestens 50% der Gesamtfläche der Leiterbahn (4) mit den Aussparungen (7) beträgt, und dass die Schichtoliche der Leiterbahn (4)
unter 10 µm beträgt.

2. Folie nach Anspruch 1, **dadurch gekennzeichnet, dass** die Antenne (1) für eine Erregung im UHF-Bereich zwischen 800 und 1000 MHz oder im SHF-Bereich zwischen 2,4 und 2,6 GHz ausgelegt ist.

3. Folie nach Anspruch 1 oder 2, **dadurch gekennzeichnet, dass** die Aussparungen (7) in der aufgebrachten Leiterbahn (4) beliebige regelmäßige oder unregelmäßige Formen aufweisen.

4. Folie nach Anspruch 3, **dadurch gekennzeichnet, dass** die Aussparungen (7) in der aufgebrachten Leiterbahn rund, ellipsenförmig oder rechteckig sind.

5. Folie nach einem der Ansprüche 1 bis 4, **dadurch gekennzeichnet, dass** die zwei Leiterbahnstücke (5) axialsymmetrisch angeordnet sind und eine Halbwellen-Dipolantenne (6) bilden.

6. Folie nach einem der Ansprüche 1 bis 5, **dadurch gekennzeichnet, dass** die Abmessungen der Aussparungen (7) in den aufgebrachten Leiterbahnstücken (5) in Richtung der Antennenenden (10) abnehmen.

7. Folie nach einem der Ansprüche 1 bis 6, **dadurch gekennzeichnet, dass** die Stegbreite zwischen den Aussparungen (7) in Richtung der Antennenenden (10) zunimmt.

8. Folie nach einem der Ansprüche 1 bis 7, **dadurch gekennzeichnet, dass** als Folienmaterial polymere Trägerfolien, mehrschichtige coextrudierte Folien oder Laminate eingesetzt werden.

## Claims

1. A film comprising an imprinted antenna (1) for use with an RFID chip, wherein the antenna (1) encompasses two conductor path pieces (5), which extend to the left and to the right from a connecting end (8) for the RFID chip, which is arranged in the center, wherein the conductor path pieces (5) in each case run straight, curved or angled from the connecting end (8) in the direction of an antenna end (10) and wherein the film encompasses a thickness of between 30 µm and 150 µm, **characterized in that** the conductor path (4) consists of a conductive printing ink and encompasses window-like cut-outs (7), wherein the surface of the cut-outs (7) is at least 50% of the total surface of the conductor path (4) with the cut-outs (7), and that the layer thickness of the conductor path (4) is below 10 µm.

2. The film according to claim 1, **characterized in that** the antenna (1) is designed for an excitation in the UHF range of between 800 and 1000 MHz or in the SHF range of between 2.4 and 2.6 GHz.

3. The film according to claim 1 or 2, **characterized in that** the cut-outs (7) in the applied conductor path (4) encompass any regular or irregular forms.

4. The film according to claim 3, **characterized in that** the cut-outs (7) in the applied conductor path are round, elliptical or rectangular.

5. The film according to one of claims 1 to 4, **characterized in that** the two conductor path pieces (5) are arranged axially symmetrically and form a half-wave dipole antenna (6).

6. The film according to one of claims 1 to 5, **characterized in that** the dimensions of the cut-outs (7) in the applied conductor path pieces (5) decrease in the direction of the antenna ends (10).

7. The film according to one of claims 1 to 6, **characterized in that** the web width between the cut-outs (7) increases in the direction of the antenna ends (10).

8. The film according to one of claims 1 to 7, **characterized in that** polymer supporting films, multi-layer coextruded films or laminates are used as film material.

## Revendications

1. Film avec une antenne (1) imprimée, destiné à être utilisé avec une puce RFID, l'antenne (1) comportant deux pièces de piste de circuit imprimé (5), qui d'une extrémité de raccordement (8) disposée au centre pour la puce RFID s'étendent vers la gauche et vers la droite, les pièces de piste de circuit imprimé (5) s'écoulant à partir de l'extrémité de raccordement (8) chaque fois sous forme rectiligne, cintrée ou coudée en direction d'une extrémité de l'antenne (10) et le film présentant une épaisseur comprise entre 30 µm et 150 µm, **caractérisé en ce que** la piste de circuit imprimé (4) est constituée d'une encre d'imprimerie conductrice et comporte des évidements (7) du type de fenêtres, la surface des évidements (7) correspondant à au moins 50 % de la surface totale de la piste de circuit imprimé (4) avec les évidements (7) et **en ce que** l'épaisseur de couche de la piste de circuit imprimé est inférieure à 10 µm.

2. Film selon la revendication 1, **caractérisé en ce que** l'antenne (1) est conçue pour une excitation dans la gamme UHF comprise entre 800 et 1000 MHz ou dans la gamme SHF comprise entre 2,4 et 2,6 GHz.

3. Film selon la revendication 1 ou la revendication 2, **caractérisé en ce que** les évidements (7) dans la piste de circuit imprimé (4) appliquée sont de formes régulières ou irrégulières quelconques.

4. Film selon la revendication 3, **caractérisé en ce que** les évidements (7) dans la piste de circuit imprimé appliquée sont de forme ronde, elliptique ou rectangulaire.

5. Film selon l'une quelconque des revendications 1 à 4, **caractérisé en ce que** les deux pièces de piste de circuit imprimé (5) sont disposées en symétrie axiale et forment une antenne dipolaire à demi-onde (6).

6. Film selon l'une quelconque des revendications 1 à 5, **caractérisé en ce que** les dimensions des évidements (7) dans les pièces de piste de circuit imprimé (5) appliquées diminuent en direction des extrémités de l'antenne (10).

7. Film selon l'une quelconque des revendications 1 à 6, **caractérisé en ce que** la largeur des listels entre les évidements (7) augmente en direction des extrémités de l'antenne (10).

8. Film selon l'une quelconque des revendications 1 à 7, **caractérisé en ce qu'**on met en oeuvre en tant que matière de film des films porteurs polymères, des films co-extrudés multicouches ou des laminés.
